# EUROPEAN PATENT SPECIFICATION

(11) **EP 2 512 364 B1**
(45) Date of publication and mention of the grant of the patent: **23.01.2019**
(21) Application number: 10810929.9
(22) Date of filing: 14.12.2010
(51) Int. Cl.: A61C 17/34, A46B 15/00

(54) **ORAL CLEANING SECTION**
ORALER REINIGUNGSABSCHNITT
ÉLÉMENT DE NETTOYAGE ORAL

(30) Priority: 15.12.2009 EP 09015485; 13.08.2010 US 855945
(43) Date of publication of application: 24.10.2012
(73) Proprietor: Braun GmbH, 61476 Kronberg/Taunus (DE)
(72) Inventor: STOERKEL, Ulrich, 61231 Bad Nauheim (DE); FRITSCH, Thomas, 65817 Eppstein (DE); STOLPER, Michael, 65760 Eschborn (DE)
(74) Representative: Schneider, Stefan Michael
(86) International application number: PCT/IB2010/055817
(87) International publication number: WO 2011/073911

(56) References cited:
- EP-A1- 2 107 892
- WO-A1-2011/051920
- WO-A1-2011/051920
- WO-A1-2011/070550
- WO-A1-2011/070550
- WO-A2-2010/007358
- DE-A1- 3 544 256
- DE-A1- 19 500 107
- DE-A1- 19 500 107
- DE-A1-102009 057 483
- DE-A1-102009 057 483
- GB-A- 2 359 739
- JP-U- S58 195 590
- JP-U- S58 195 590
- US-A- 5 186 627
- US-A- 5 802 656
- US-A- 5 802 656
- US-A1- 2003 226 223
- US-A1- 2005 166 344
- US-A1- 2005 166 344
- US-A1- 2007 056 128
- US-A1- 2007 056 128
- US-A1- 2009 044 357
- US-A1- 2009 044 357
- US-B1- 6 993 804
- US-B1- 6 993 804

## Description

### FIELD OF THE INVENTION

The present invention is concerned with an oral cleaning section and it is in particular concerned with an oral cleaning section that has a first carrier on which at least a first cleaning element is mounted and a second carrier on which at least a second cleaning element is mounted.

### BACKGROUND OF THE INVENTION

US 2008/0307591 A1 discloses as an oral cleaning section a brush section for use with an electric toothbrush. The brush section has a brush head portion that supports a first plurality of contact elements and a movable contact element holder that supports a second plurality of contact elements. In some embodiments, multiple rows of the first plurality of contact elements are separated by a row or rows of the second plurality of contact elements.

Each of the support structures must have a width that allows mounting of the contact elements without breaking or unduly deforming the support structures, which does not allow a high density of contact elements perpendicular to the row direction, specifically when the rows of contact elements of the first and second plurality of contact elements are alternately arranged.

DE 195 00 107 A1 describes a manual toothbrush having an adaptable height profile of the tufts of the toothbrush. The brush head has an upper portion and a lower portion that are joined together at a front end of the head. The upper portion of the head comprises tufts arranged in rows at the front end of the toothbrush. The lower portion of the head comprises tufts arranged in rows that extend through holes in the upper portion of the head, which tufts are arranged behind the tufts of the upper portion. The toothbrush comprises an operating lever extending from the lower portion, which lever extends through an opening in the handle of the toothbrush, the handle being fixedly connected at the upper portion of the head. The user can manually push the lever from a latched top position into a latched lower position in which the lower head portion is moved such that the tufts extending from the lower portion change their height profile in accordance with the bending of the lower portion. The user can manually push the lever back into the top latched position.

US 5 186 627 discusses a toothbrush including assembled parts, namely: a handle; a base; ten rotatable brush members; and a cover. Each rotatable brush includes a forward tuft-supporting section, a rear pinion section and an intermediate annular ledge. The front surface of the forward section is substantially flush with the front surface of base. Tufts are positioned in holes in the forward sections.

GB 2 359 739 A discusses an electric toothbrush head comprises inner and outer concentric bristle-carrying discs, the discs being drivable such that they oscillate in antiphase about a common axis. When the brush carrier and the head are attached together, the circular face of the inner bristle-carrying portion and the front surface of the outer bristle-carrying portion form a unitary brush face.

The document WO2010/007358 has been filed on 14-07-2009 and published on 21-01-2010. This document discloses a toothbrush head comprising a fixed head element and at least one insert element so mounted to the fixed head element as to be rotationally movable with respect to the fixed head element, and a plurality of bristles extending from each of said fixed head element and said at least one insert element.

Thus it is a desire to provide an oral cleaning section that enables a high density of first and second oral cleaning elements while allowing for a relative movement of the first and second cleaning elements relative to each other.

### SUMMARY OF THE INVENTION

An oral cleaning section that satisfies the mentioned desire is given in accordance with claim 1. Further embodiments are given by the dependent claims.

The oral cleaning section as proposed comprises a first carrier that has a cleaning side on which at least a first cleaning element is mounted and a second carrier having a cleaning side on which at least a second cleaning element is mounted. At least an aperture is provided in the first carrier. The second carrier is arranged underneath the first carrier with respect to the cleaning side of the first carrier (i.e. the first and the second carrier are arranged on top of each other such that the cleaning side of the first carrier defines the outmost lying side of the arrangement that is intended for facing an oral site to be cleaned). Further, the cleaning side of the second carrier laterally extends beyond the aperture, i.e. the second carrier overlaps with the first carrier at least in a lateral direction, which is enabled as the carriers (not only their mounting surfaces) are arranged underneath each other. The second cleaning element extends through the aperture. The first carrier and the second carrier are arranged for relative movement to each other. As the first carrier and the second carrier are arranged on top of each other this allows for overlap in the wall thickness needed for mounting the first and the second cleaning elements on the first and second carrier, respectively. This leads to a higher cleaning element density in the formed cleaning element field as the first and second cleaning elements can be brought closer together with the proposed arrangement than in an arrangement as known from US 2008/0307591 A1. The first and/or the second cleaning element or cleaning elements may be realized by bristles or by bristle tufts, but this shall not mean that it should be excluded that cleaning elements can be realized as e.g. soft elastomeric cleaning structures.

In accordance with the invention, the oral cleaning section comprises a coupling element for transferring motion induced by a drive to at least one of the first or second carrier. The first carrier has at least two apertures and at least two second rows of second cleaning elements are mounted on the second carrier and each of the second rows of second cleaning elements extends through one of the two apertures.

In an embodiment of the proposed oral cleaning section, the first carrier and the second carrier are movably coupled to each other, e.g. the second carrier can be supported by the first carrier so as to enable the relative movement in a low volume realization.

In another embodiment of the proposed oral cleaning section, the second carrier is arranged for an oscillatory wiping motion around a longitudinal axis that is essentially parallel to a longitudinal extension axis of the oral cleaning section. Thus, in operation, when the oral cleaning section extends into the oral cavity, the second cleaning element or the second cleaning elements perform an oscillatory wiping motion similar to the wiping motion a user of a manual toothbrush would utilize to clean the teeth, but in the proposed embodiment the user does not have to move the oral cleaning section actively.

In an even further embodiment of the proposed oral cleaning section, the first carrier is arranged to at least partially envelope the second carrier. The first carrier may be designed to house the second carrier in an internal cavity. In particular, the second carrier may have a second side that is exposed at the back of the oral cleaning section such that it can be brought into contact with tissue present in the oral cavity. The second side may have a texture, i.e. a roughness or structures suitable for e.g. cleaning the tongue.

In this respect, according to an aspect of the invention, an oral cleaning section has a mounting structure and a second carrier having a cleaning side on which at least a cleaning element is mounted and a second side being opposite to the cleaning side, which second side is exposed so that it can be brought into contact with tissue present in an oral cavity, e.g. a tongue, where the second side may be textured.

In yet another embodiment of the proposed oral cleaning section, at least a first row of first cleaning elements is mounted on the first carrier and at least a second row of second cleaning elements is mounted on the second carrier, with the second row of second cleaning elements extending through the aperture. Several apertures may be formed in the first carrier such that one of the several second rows of second cleaning elements extend through each one of the apertures and several first rows of first cleaning elements may be mounted on the first carrier such that the first rows and the second rows are alternately arranged. In such an embodiment, a high density of cleaning elements in a direction perpendicular to the row extension direction can be achieved.

In an embodiment of the proposed oral cleaning section, the distance between an outer edge of the first cleaning element and an outer edge of the second cleaning element is less than 1.6 mm, e.g. less than 1.4 mm or less than 1.2 mm and in particular the distance may be around 1.0 mm. This can only be achieved if the wall thickness required for mounting overlaps, which is allowed because of the stacked arrangement of the first and second carriers.

In another embodiment of the proposed oral cleaning section, a third carrier concludes the oral cleaning section at a distal end (where the distal end is the end that lies away from a handle section of the oral cleaning device in an attached state, i.e. the proximal end of the cleaning section is the end that is intended for coupling to the handle section), with the third carrier being fixedly connected with the second carrier. In such an arrangement, the third carrier would perform the same relative motion to the first carrier as the second carrier, e.g. an oscillatory wiping motion around a longitudinal axis. The specific arrangement of a carrier arranged so as to conclude the oral cleaning section can be considered as a novelty in itself that is independent from the other features previously discussed. The respective carrier may in particular be arranged for an oscillatory wiping motion around a longitudinal axis that is parallel to the longitudinal extension axis of the oral cleaning section.

The oral cleaning section may be realized as a replacement brush-head for detachable connection to a handle section of a toothbrush, in particular an electric toothbrush.

The invention is further concerned with an oral cleaning device (such as an electric toothbrush or a manual toothbrush) in which an oral cleaning section as proposed is utilized. In case the oral cleaning device is realized as a manual toothbrush, the oral cleaning section may be integral with a handle of the manual toothbrush. The oral cleaning device may comprise a handle section to which the oral cleaning section is detachably attached. In a manual toothbrush, provision may be made for an actuator that can be used to move the second carrier.

### BRIEF DESCRIPTION OF THE DRAWINGS

The invention will be further elucidated by a description of an exemplary embodiment and with reference to figures. In the figures
- Fig. 1A: is a side view onto an oral cleaning section as proposed that is realized as a detachable brush head for an electric toothbrush;
- Fig. 1B: is a frontal view onto the cleaning side of the oral cleaning section shown in Fig. 1A;
- Fig. 2: is a longitudinal cross sectional cut through the oral cleaning section shown in Fig. 1B along line A-A;
- Fig. 3: is a frontal view onto the cleaning side of the head part of the oral cleaning section shown in Fig. 1B without mounted bristle tufts;
- Fig. 4: is a longitudinal cross sectional cut through a front section of the head part of the oral cleaning section as shown in Fig. 3 along line B-B;
- Fig. 5: is a staged cross sectional cut through the head part of the oral cleaning section as shown in Fig. 4 along line C-C; and
- Fig. 6: is a perspective view onto an oral cleaning device realized as an electric toothbrush that comprises a detachable oral cleaning section as proposed.

### DETAILED DESCRIPTION OF THE INVENTION

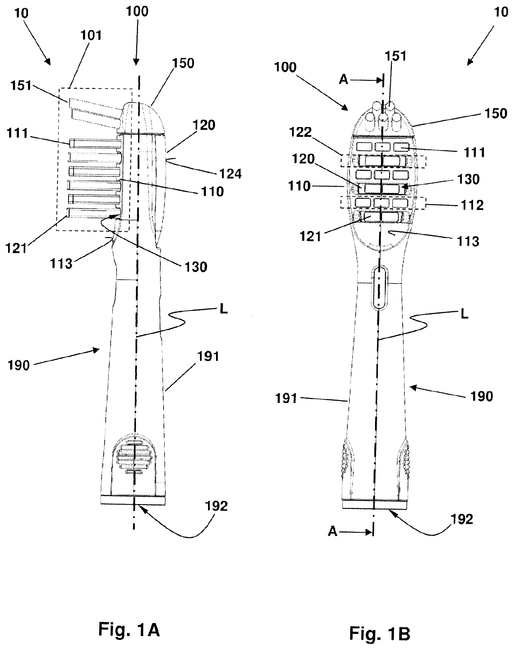

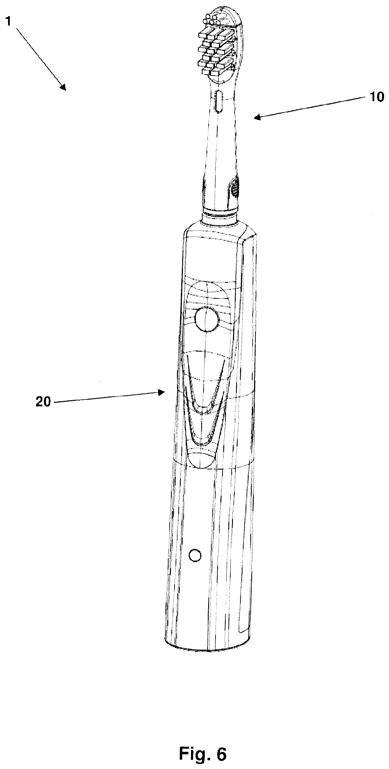

Fig. 1A is a side view onto an exemplary embodiment of an oral cleaning section 10 as proposed. In the shown embodiment, the oral cleaning section 10 is realized as a detachable brush head for detachable connection to a handle section of an oral cleaning device (in Fig. 6 an exemplary oral cleaning device is shown that is realized as an electric toothbrush). The oral cleaning section 10 comprises a head part 100 and a tubular mounting structure 190. The head part 100 of the oral cleaning section 10 comprises a cleaning element field 101 (here realized as a bristle tuft field) that extends from the head part 100 essentially into a direction perpendicular to the longitudinal extension direction L of the oral cleaning section, as is usual in the art to enable effective cleaning of an area in the oral cavity such as the teeth, the gums, the mucosa, or the tongue surface. In another embodiment, the oral cleaning section is integral with a handle section of an (battery-operated or rechargeable) electric toothbrush or a manual toothbrush.

The mounting structure 190 comprises a tube 191 that is slightly tapered towards the head part 100 and is realized as being integral with a first carrier 110 of the head part 100 of the oral cleaning section 10. The tube 191 has an opening 192 at the end distal to the head part 100 for accommodating e.g. a driving shaft extending from the handle section of the oral cleaning device and for detachably mounting the oral cleaning section to a handle section of an oral cleaning device.

The first carrier 110 has a cleaning side 113 on which first cleaning elements 111 (here realized as bristle tufts) are mounted, which first cleaning elements 111 are part of the cleaning element field 101. The first carrier 110 is an integral part of the oral cleaning section 10 and can be manufactured e.g. by a single plastic injection moulding process together with the tube 191. The first cleaning elements 111 may be considered as static cleaning elements of the oral cleaning section 10 as they are fixed in relation to the mounting structure 190. When mounted onto the handle section of the oral cleaning device, the first carrier 110 may not be driven during operation but may remain static with respect to the tube 191 and the handle section. In another embodiment, the whole cleaning section 10 is additionally driven into a motion (e.g. a reciprocation oscillation in longitudinal extension direction L). The first cleaning elements 111 are then still fixed (i.e. static) with respect to the mounting structure 190.

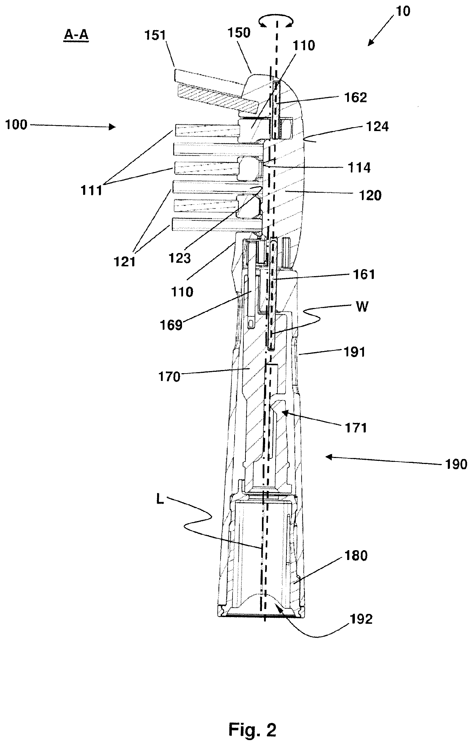

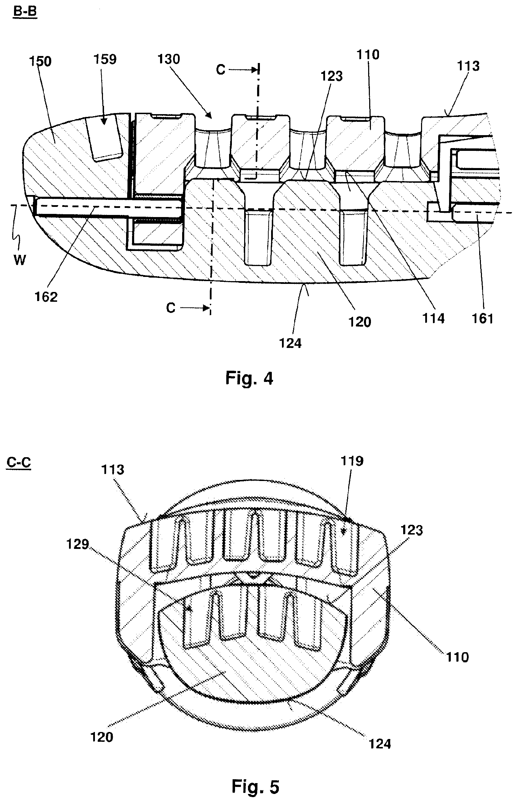

The head part 100 further comprises a second carrier 120 that is a movably supported part of the oral cleaning section 10 (as will be further discussed with reference to Fig. 2 and Fig. 4). Second cleaning elements 121 (here also realized as bristle tufts) are mounted on the cleaning side of the second carrier 120, which second cleaning elements 121 extend through apertures 130 formed in the first carrier 110 so that the second cleaning elements 121 are here also part of the cleaning element field 101 and are arranged in close vicinity to the first cleaning elements 111. The first and second cleaning elements 111 and 121 form the cleaning element field 101 (here a bristle tuft field) as is known from brush heads of manual or electric toothbrushes. When attached to a handle section of an electric oral cleaning device, the second carrier 120 may be coupled to the drive shaft of the electric oral cleaning device. During operation the second carrier 120 would then be set into an arcuate oscillatory motion (or: oscillatory wiping motion or sweeping motion) around a longitudinal axis that is essentially parallel to a longitudinal extension axis L of the oral cleaning section 10. In operation, the second cleaning elements 121 will then move relative to the first cleaning elements 111 (which will here remain static with respect to the mounting structure 190). Generally, the first carrier 110 and the second carrier 120 are arranged for relative movement to each other, hence in another embodiment, the first carrier and the second carrier are both arranged for relative movement with respect to each other and with respect to the mounting structure. The oscillatory wiping motion of the second cleaning elements 121 around the longitudinal axis is very similar to the motion a user would perform with a manual oral cleaning device, e.g. a manual toothbrush. Hence, the shown embodiment of an oral cleaning section 10 as proposed supports the feeling of a natural motion that may be preferred by some users in contrast to other motions the brush head may perform.

The second carrier 120 has a second side 124 that extends through an opening in the backside of the head part 100 (i.e. the first carrier is designed in such a way that it covers the cleaning side of the second carrier 120 and also partially envelopes the second carrier 120 - one may say that the second carrier 120 is here partially housed in the first carrier 110 - such that the second side 124 of the second carrier 120 is exposed). Hence, in operation not only the second cleaning elements 121 move with respect to the mounting structure 191, also the second side 124 of the second carrier 120 moves and thus provides a moving surface on the back side of the head part 100. This can be used to e.g. provide a tongue cleaner structure suitable to clean the tongue by making the second side 124 of the second carrier 120 textured (e.g. by making the second side 124 rough or by providing structures on the backside; the texture may be provide by a further material layer, e.g. an elastomeric material, applied to the second side 124).

It is to be noted here that it is considered an invention in itself to provide an oral cleaning section having a head part and at least a carrier movably supported at the head part, which movable carrier has a first side on which cleaning elements are mounted and a second side that is exposed at the back side of the head part, which back side is opposite to the front side of the head part from which the cleaning elements are extending.

In the shown exemplary embodiment, the head part 100 further comprises a third carrier 150 concluding the distal end of the oral cleaning section 10. The third carrier 150 has a cleaning side on which third cleaning elements 151 (here again realized as bristle tufts) are mounted. The extension direction of the third cleaning elements 151 is somewhat (outwards) inclined with respect to the cleaning side of the oral cleaning section 10, whereas the extension direction of the first and second cleaning elements 111 and 121 is essentially normal to the cleaning side of the oral cleaning section 10. In the shown embodiment, the third carrier 150 is integral with the second carrier 120. The provision of such a movable carrier that concludes the distal end of the oral cleaning section and also performs an oscillatory wiping motion around a longitudinal axis that is essentially parallel to the longitudinal extension axis of the oral cleaning section 10 is an independent novelty in itself and is further considered as an optional feature in the context of the present invention.

In case the first or second or third cleaning elements 111, 121, or 151, respectively, are realized as bristle tufts, they can be mounted to the first, second, or third carriers 110, 120, or 150, respectively, in a manner as is known in the art, e.g. via stapling (anchoring), anchor free tufting (AFT), or an in-moulding process. Instead of bristle or bristle tufts, at least some of the cleaning elements could e.g. be realized as soft and flexible elastomeric fingers for massaging and softly removing debris from oral tissue or as thin and flexible flaps for cleaning in the interdental cavities etc.

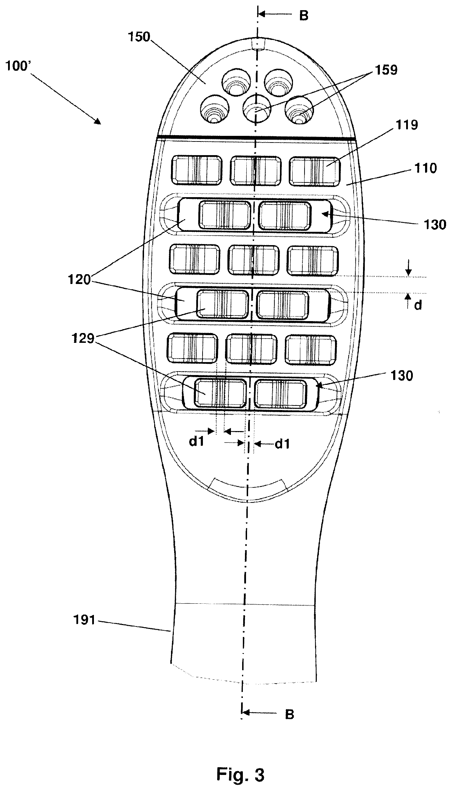

Fig. 1B is a frontal view onto the cleaning side 113 of the oral cleaning section 10 as shown in Fig. 1A. The same features as already shown in Fig. 1A have the same reference numerals and reference is made to the description above. In the frontal view it can be seen that the first cleaning elements 111 and the second cleaning elements 121 are arranged in alternating rows. The first cleaning elements 111 form first rows 112 of first cleaning elements and the second cleaning elements 121 form second rows 122 of second cleaning elements. Here, three first rows 112, each having three double tufts, and three second rows 122, each having two double tufts, are alternately arranged in longitudinal direction. As shown here, the rows of cleaning elements may be centrically aligned in their rest position. Hence, during operation every other row of cleaning elements is set into an arcuate oscillation that occurs in a plane being essentially perpendicular to the longitudinal extension axis of the oral cleaning section 10. The second cleaning elements 121 extend through apertures 130 formed in the first carrier 110. The apertures 130 have a circumferential extension (here circumferential is meant with respect to the longitudinal extension axis L indicated by the dash-dotted line drawn in Fig. 1B; the aperture 130 needs not to be bent around the longitudinal extension axis) that is large enough to allow for the arcuate oscillation of the second cleaning elements 121, but the axial extension (in the longitudinal extension axis L) is only about as wide as the axial extension (here the axial extension is the width of the second cleaning elements 121 in the longitudinal extension direction) of the second cleaning elements 121 (here realized as bristle tufts) to allow for a high density of the cleaning elements in longitudinal direction (in other words: the chosen design supports achieving a minimal distance between the first and second rows 112 and 122 in the longitudinal direction, which leads to a high density of cleaning elements in longitudinal direction; this will be further discussed with reference to Fig. 3 and Fig. 4). The achieved density of cleaning elements in longitudinal direction is higher than the density that could be achieved on first and second carriers that are arranged side by side instead of on top of each other, as the mounting of cleaning elements such as bristle tufts requires a certain wall thickness of carrier material between mounting cavities to avoid that the material breaks (or deforms) during the mounting process (e.g. anchoring requires to have a wall thickness of about 0.8 mm or more). The present invention proposes to have a first and a second carrier 110 and 120 that are arranged on top of each other with respect to the extension direction of the cleaning elements such that the first and second carriers can move relatively to each other and can both laterally extend so that they overlap in at least a lateral direction. This allows for an overlap of the required walls between the mounting cavities so that in total a higher density of cleaning elements in longitudinal direction is achieved than with a side-by-side (non-overlapping) arrangement.

It is to be noted that the shown embodiment is just exemplary. The basic feature relating to an aspect of the proposed oral cleaning section relies in the fact that a first carrier and a second carrier are arranged on top of each other (the first and second carriers thereby laterally overlapping). Only a single second cleaning element may be mounted on the cleaning side of the second carrier. The first and/or second cleaning elements may be arranged as individual elements, in rows, in arrays etc. The first and second cleaning elements may be arranged in alternating order or the second cleaning element or second cleaning elements may extend through a single aperture formed in the first carrier or through several apertures formed in the first carrier.

Fig. 2 is a longitudinal cross sectional cut through the oral cleaning section 10 as shown in Fig. 1B along line A-A. The tube 191 of the mounting structure 190 is essentially hollow and accommodates a sleeve 180 for clamping the oral cleaning section 10 onto a mount of a handle section of an oral cleaning device and a coupling element 170 for coupling the drive shaft of the oral cleaning device to the movably supported second carrier 120. The mount and the shaft of the handle section of the oral cleaning device are inserted into the hollow tube 191 through opening 192. The coupling element 170 comprises a snap-fit hook 171 having a V-like nose that snaps into a V-like groove formed in the shaft of the drive shaft to establish a detachable connection of the coupling element 170 and the shaft. Such a snap-hook fit is described in EP 0 500 537 B1, the disclosure of which is incorporated herein by reference. The sleeve 180 has a spring-like element that clamps onto the mount. The details of the sleeve 180 and of the coupling insert 170 are in more detail explained in US 6,588,042 and EP 1 023 001 B1, the disclosure of which is incorporated herein by reference. The coupling element 170 is coupled to the second carrier 120 via a coupling shaft 163, which coupling shaft 163 transfers a motion induced through the drive shaft of the oral cleaning device onto the coupling element 170 to the second carrier 120, so that an oscillatory wiping motion of the second carrier 120 essentially around a longitudinal axis W defined by the first and second bearing shafts 161 and 162 is effected during operation. The longitudinal axis W defined by the first and second bearing shafts 161 and 162 is essentially parallel to the longitudinal extension axis L of the oral cleaning section 10. In the shown exemplary embodiment, the second carrier 120 is integral with the third carrier 150, which third carrier 150 is hence also performing said oscillatory wiping motion during operation. The third carrier 150 is movably supported at the first carrier 110 via the second bearing shaft 162. As has already been explained, the second cleaning elements 121 that are mounted on the cleaning side 123 of the second carrier 120 extend through apertures 130 formed in the first carrier 110 and thus form a high density cleaning element field together with the first cleaning elements 111 mounted on the cleaning side 113 (see Fig. 1A) of the first carrier 110 in close vicinity of the apertures 130. In the shown example, also the third cleaning elements 151 mounted on the cleaning side of the third carrier 150 are members of the cleaning elements field.

In Fig. 2 it can be seen that the second carrier 120 is arranged underneath the first carrier 110, i.e. the cleaning side 123 of the second carrier 120 is positioned underneath the second side 114 (being opposite to the cleaning side of the first carrier) of the first carrier 110, thus allowing for a lateral overlap of the first and second carriers 110 and 120.

Fig. 3 is a frontal view onto the cleaning side 113 of a "naked" head part 100' of the oral care section as was shown in Fig. 1B, but here shown without mounted cleaning elements. Thus, first mounting holes 119 for mounting of the first cleaning elements are visible in the first carrier 110, second mounting holes 129 for mounting the second cleaning elements are visible in the second carrier 120 through the apertures 130 formed in the first carrier 110, and third mounting holes 159 for mounting of the third cleaning elements are visible in the third carrier 150. The first mounting holes 119 and the second mounting holes 129 are realized as double tuft holes with a recessed bridge wall to enhance the density of cleaning elements in the row direction. Mounting holes subdivided into multiple segments are described in EP 1 138 222 B1, the content of which is included herein by way of reference. The vertical distance d1 (which is the distance between the mounting holes measured in a plane perpendicular to the longitudinal extension axis that coincides with line B-B) between the double holes is here about 0.8 mm, which is required to ensure e.g. secure stapling of bristle tufts without the risk to break or strongly deform the intermediate walls. The total longitudinal distance d between the rows of cleaning elements is here about 1 mm due to a wall thickness of about 0.8 mm between the first mounting holes 119 and the wall of the apertures 130 and a small distance of about 0.2 mm between the second mounting holes 129 and the aperture walls (the latter distance allowing for a slight widening of e.g. bristle tufts that extend through the apertures 130). In case the second carrier 120 would be arranged side-by-side with the first carrier 110 (whether the carriers would be arranged at the same height or one of the carriers being somewhat recessed), the minimal wall thickness of about 0.8 mm required for the second carrier would add to the wall thickness of 0.8 mm required for the first carrier, so that a distance of at least about 1.6 mm would result between the rows of cleaning elements. A side-by-side arrangement of a first carrier and a second carrier is described in EP 2 107 892 A1, the content of which is included herein by way of reference. Hence, the proposed arrangement of second carrier 120 arranged underneath the first carrier 110 allows to increase the density of cleaning elements in the direction that is perpendicular to the row direction. The distance d between a row of first cleaning elements and a row of second cleaning elements can hence be made less than about 1.6 mm, the distance d can be made less than about 1.4 mm, less than about 1.2 mm and the distance d can be made to lie in the range of about 0.8 - 1.0 mm. In general, the distance between cleaning elements arranged on the first carrier and cleaning elements arranged on the second carrier can be made about as small as the distance between two cleaning elements arranged on only one of the two carriers due to the allowed lateral overlap between the first and second carriers arranged on top of each other.

Fig. 4 is a longitudinal cross sectional cut through a front section of the "naked" head part 100' as shown in Fig. 3 along the line B-B as indicated in Fig. 3. The second carrier 120 is movably supported at the first carrier 110 of the oral cleaning section via the first bearing shaft 161 and the second bearing shaft 162. The front part of the first bearing shaft 161 is secured to the second carrier 120. The second bearing shaft 162 extends in longitudinal direction and is secured to the third carrier 150 and is loosely extending into a bore formed in the first carrier 110 so that the second carrier 120 (and the third carrier 150 being integral with the second carrier 120) can pivot around the longitudinal axis W defined by the first bearing shaft 161 and the second bearing shaft 162. As the cross sectional cut goes through the walls between the second mounting holes, the second mounting holes are not visible. The cut goes also through the recessed bridge walls of the first mounting holes so that the first mounting holes are also not visible. A third mounting hole 159 is visible in this cross-sectional cut. Further, the apertures 130 are visible. In the mounted state, the second cleaning elements 121 extend through the apertures 130 as is shown in Fig. 2. The second carrier 120 has a second side 124 that is exposed at the back side of the head part. The second side 124 may be textured, e.g. may be provided with a pattern of elastomeric elements suitable for tongue cleaning as is generally known in the art. As can be seen, the cleaning side 123 of the second carrier 120 laterally extends (here: in longitudinal direction) underneath the second side 114 of the first carrier 110 so that the first and second carriers 110 and 120 overlap in longitudinal direction.

Fig. 5 is a stepped cross sectional cut through the head part of the oral cleaning section along line C-C as indicated in Fig. 4. Line C-C is stepped so that the cut goes through the first mounting holes 119 and the second mounting holes 129. The second carrier 120 is partially enveloped (i.e. enclosed) by the first carrier 110. The second side 124 of the second carrier 120 is exposed at the back side of the head part so that it can be brought into contact with tissue present in the oral cavity, e.g. the tongue. In another embodiment, the first carrier is fully enveloping the second carrier (i.e. the second carrier is fully housed inside the first carrier without the second side of the second carrier being exposed).

Fig. 6 shows an oral cleaning device 1 realized as an electric toothbrush comprising a handle section 20 and an oral cleaning section 10 as proposed realized as a detachable brush head.

The dimensions and values disclosed herein are not to be understood as being strictly limited to the exact numerical values recited. For example, a dimension disclosed as "40 mm" is intended to mean "about 40 mm."

## Claims

1. An oral cleaning section (10) comprising:
a first carrier (110) that has a cleaning side on which at least a first cleaning element (111) is mounted and a second side opposite to the cleaning side;
a second carrier (120) that has a cleaning side on which at least a second cleaning element (121) is mounted;
at least an aperture (130) being formed in the first carrier (110) such that the aperture extends from the cleaning side to the second side, with the second cleaning element (121) extending through the aperture (130);
the second carrier (120) being arranged underneath the first carrier (110) such that the cleaning side of the second carrier (120) is underneath the second side of the first carrier (110) and laterally extends beyond the aperture in at least a first direction;
wherein the first carrier (110) and the second carrier (120) are arranged for relative movement to each other and the oral cleaning section further comprises a coupling element (170) for transferring a motion induced by a drive to at least one of the first carrier (110) or the second carrier (120); and
wherein the first carrier (110) has at least two apertures (130) and at least two second rows (122) of second cleaning elements (121) are mounted on the second carrier (120) and each of the second rows (122) of second cleaning elements (121) extends through one of the two apertures (130).

2. The oral cleaning section according to claim 1, wherein the first carrier (110) and the second carrier (120) are movably coupled to each other.

3. The oral cleaning section according to one of claim 1 or claim 2, wherein the second carrier (120) is arranged for an oscillatory wiping motion around a longitudinal axis (W) that is essentially parallel to a longitudinal extension axis (L) of the oral cleaning section (10).

4. The oral cleaning section according to any one of claims 1 to 3, wherein at least one of the first and second cleaning elements (111; 121) is realized as a bristle or a bristle tuft.

5. The oral cleaning section according to any one of claims 1 to 4, wherein the first carrier (120) is arranged to at least partially envelope the second carrier (110).

6. The oral cleaning section according to claim 5, wherein a second side of the second carrier forms an exterior surface of the oral cleaning section, the second side of the second carrier in particular being textured.

7. The oral cleaning section according to claim 6, wherein the second side of the second carrier is textured.

8. The oral cleaning section according to any one of claims 1 to 7, wherein at least a first row (112) of first cleaning elements (111) is mounted on the first carrier (110).

9. The oral cleaning section according to any one of claims 1 to 8, wherein a distance (d) between an outer edge of the first cleaning element (111) and an outer edge of the second cleaning element (112) is less than 1.6 mm, in particular is about 1.0 mm.

10. The oral cleaning section according to any one of claims 1 to 9, wherein a third carrier (150) concludes the oral cleaning section (10) at the distal end and the third carrier (150) is fixedly connected with the second carrier (120).

11. The oral cleaning section according to any one of claims 1 to 10, wherein the oral cleaning section (10) is realized as a replacement brush head for detachable connection to a handle section (20) of a toothbrush (1).

12. An oral cleaning device (1) comprising an oral cleaning section (10) according to any one of claims 1 to 11.

13. The oral cleaning device according to claim 12 that further comprises a handle section (20) to which the oral cleaning section (10) is detachably connected.

14. The oral cleaning device according to claim 12 or claim 13 that is realized as a toothbrush, in particular as an electric toothbrush.

## Patentansprüche

1. Mundreinigungsabschnitt (10), umfassend:
einen ersten Träger (110), der eine Reinigungsseite, an der wenigstens ein erstes Reinigungselement (111) angebracht ist, und eine zweite, der Reinigungsseite gegenüberliegende Seite aufweist;
einen zweiten Träger (120), der eine Reinigungsseite aufweist, an der wenigstens ein zweites Reinigungselement (121) angebracht ist;
wenigstens eine Öffnung (130), die derart in dem ersten Träger (110) ausgebildet ist, dass sich die Öffnung von der Reinigungsseite zu der zweiten Seite erstreckt, wobei sich das zweite Reinigungselement (121) durch die Öffnung (130) erstreckt;
wobei der zweite Träger (120) unter dem ersten Träger (110) derart angeordnet ist, dass die Reinigungsseite des zweiten Trägers (120) unterhalb der zweiten Seite des ersten Trägers (110) liegt und sich in wenigstens einer ersten Richtung lateral über die Öffnung hinaus erstreckt;
wobei der erste Träger (110) und der zweite Träger (120) derart angeordnet sind, dass eine relative Bewegung zueinander ermöglicht wird, und wobei der orale Reinigungsabschnitt ferner ein Kopplungselement (170) zum Übertragen einer durch einen Antrieb induzierten Bewegung auf wenigstens einen von dem ersten Träger (110) oder dem zweiten Träger (120) aufweist; und
wobei der erste Träger (110) wenigstens zwei Öffnungen (130) aufweist und wenigstens zwei zweite Reihen (122) zweiter Reinigungselemente (121) auf dem zweiten Träger (120) angebracht sind und jede der zweiten Reihen (122) zweiter Reinigungselemente (121) sich durch eine der beiden Öffnungen (130) hindurch erstreckt.

2. Mundreinigungsabschnitt nach Anspruch 1, wobei der erste Träger (110) und der zweite Träger (120) beweglich miteinander gekoppelt sind.

3. Mundreinigungsabschnitt nach einem von Anspruch 1 oder Anspruch 2, wobei der zweite Träger (120) derart angeordnet ist, dass eine oszillierende Wischbewegung um eine Längsachse (W) ermöglicht wird, die im Wesentlichen parallel zu einer Längsachse (L) des Mundreinigungsabschnitts (10) ist.

4. Mundreinigungsabschnitt nach einem der Ansprüche 1 bis 3, wobei wenigstens eines des ersten und des zweiten Reinigungselements (111; 121) als Borste oder Borstenbüschel ausgeführt ist.

5. Mundreinigungsabschnitt nach einem der Ansprüche 1 bis 4, wobei der erste Träger (120) derart angeordnet ist, dass er den zweiten Träger (110) wenigstens teilweise umgibt.

6. Mundreinigungsabschnitt nach Anspruch 5, wobei eine zweite Seite des zweiten Trägers eine Außenoberfläche des Mundreinigungsabschnitts bildet, wobei insbesondere die zweite Seite des zweiten Trägers strukturiert ist.

7. Mundreinigungsabschnitt nach Anspruch 6, wobei die zweite Seite des zweiten Trägers strukturiert ist.

8. Mundreinigungsabschnitt nach einem der Ansprüche 1 bis 7, wobei wenigstens eine erste Reihe (112) der ersten Reinigungselemente (111) an dem ersten Träger (110) angebracht ist.

9. Mundreinigungsabschnitt nach einem der Ansprüche 1 bis 8, wobei ein Abstand (d) zwischen einem Außenrand des ersten Reinigungselements (111) und einem Außenrand des zweiten Reinigungselements (112) weniger als 1,6 mm, insbesondere ungefähr 1,0 mm, beträgt.

10. Mundreinigungsabschnitt nach einem der Ansprüche 1 bis 9, wobei ein dritter Träger (150) den Mundreinigungsabschnitt (10) am distalen Ende abschließt und der dritte Träger (150) fest mit dem zweiten Träger (120) verbunden ist.

11. Mundreinigungsabschnitt nach einem der Ansprüche 1 bis 10, wobei der Mundreinigungsabschnitt (10) als Ersatzbürstenkopf für eine abnehmbare Verbindung mit einem Griffabschnitt (20) einer Zahnbürste (1) ausgeführt ist.

12. Mundreinigungsvorrichtung (1), umfassend einen Mundreinigungsabschnitt (10) nach einem der Ansprüche 1 bis 11.

13. Mundreinigungsvorrichtung nach Anspruch 12, die ferner einen Griffabschnitt (20) umfasst, mit dem der Mundreinigungsabschnitt (10) abnehmbar verbunden ist.

14. Mundreinigungsvorrichtung nach Anspruch 12 oder Anspruch 13, der als Zahnbürste, insbesondere als elektrische Zahnbürste, ausgeführt ist.

## Revendications

1. Section de nettoyage buccal (10) comprenant :
un premier support (110) qui a un côté de nettoyage sur lequel au moins un premier élément de nettoyage (111) est monté et un deuxième côté opposé au côté de nettoyage ;
un deuxième support (120) qui a un côté de nettoyage sur lequel au moins un deuxième élément de nettoyage (121) est monté ;
au moins une ouverture (130) étant formée dans le premier support (110) de sorte que l'ouverture s'étend du côté de nettoyage au second côté, le deuxième élément de nettoyage (121) s'étendant à travers l'ouverture (130) ;
le deuxième support (120) étant agencé sous le premier support (110) de sorte que le côté de nettoyage du deuxième support (120) est sous le second côté du premier support (110) et s'étend latéralement au-delà de l'ouverture dans au moins une première direction ;
dans laquelle le premier support (110) et le deuxième support (120) sont agencés pour un mouvement relatif l'un par rapport à l'autre et la section de nettoyage buccal comprend en outre un élément de couplage (170) pour transférer un mouvement induit par un entraînement vers au moins l'un du premier support (110) ou du deuxième support (120) ; et
dans laquelle le premier support (110) a au moins deux ouvertures (130) et au moins deux deuxièmes rangées (122) des deuxièmes éléments de nettoyage (121) sont montées sur le deuxième support (120) et chacune des deuxièmes rangées (122) des deuxièmes éléments de nettoyage (121) s'étend à travers l'une des deux ouvertures (130).

2. Section de nettoyage buccal selon la revendication 1, dans laquelle le premier support (110) et le deuxième support (120) sont couplés de manière mobile l'un à l'autre.

3. Section de nettoyage buccal selon l'une des revendications 1 ou 2, dans laquelle le deuxième support (120) est agencé pour un mouvement d'essuyage oscillatoire autour d'un axe longitudinal (W) qui est essentiellement parallèle à un axe d'extension longitudinal (L) de la section de nettoyage buccal (10).

4. Section de nettoyage buccal selon l'une quelconque des revendications 1 à 3, dans laquelle au moins l'un des premier et deuxième éléments de nettoyage (111 ; 121) est réalisé sous la forme de poils ou d'une touffe de poils.

5. Section de nettoyage buccal selon l'une quelconque des revendications 1 à 4, dans laquelle le premier support (120) est agencé pour envelopper au moins partiellement le deuxième support (110).

6. Section de nettoyage buccal selon la revendication 5, dans laquelle un deuxième côté du deuxième support forme une surface extérieure de la section de nettoyage buccal, le deuxième côté du deuxième support étant en particulier texturé.

7. Section de nettoyage buccal selon la revendication 6, dans laquelle le deuxième côté du deuxième support est texturé.

8. Section de nettoyage buccal selon l'une quelconque des revendications 1 à 7, dans laquelle au moins une première rangée (112) de premiers éléments de nettoyage (111) est montée sur le premier support (110).

9. Section de nettoyage buccal selon l'une quelconque des revendications 1 à 8, dans laquelle une distance (d) entre un bord extérieur du premier élément de nettoyage (111) et un bord extérieur du deuxième élément de nettoyage (112) est inférieure à 1,6 mm, en particulier est d'environ 1,0 mm.

10. Section de nettoyage buccal selon l'une quelconque des revendications 1 à 9, dans laquelle un troisième support (150) termine la section de nettoyage buccal (10) au niveau de l'extrémité distale et le troisième support (150) est relié de manière fixe au deuxième support (120).

11. Section de nettoyage buccal selon l'une quelconque des revendications 1 à 10, dans laquelle la section de nettoyage buccal (10) est réalisée sous la forme d'une tête de brosse de remplacement pour une connexion détachable à une section de poignée (20) d'une brosse à dents (1).

12. Dispositif de nettoyage buccal (1) comprenant une section de nettoyage buccal (10) selon l'une quelconque des revendications 1 à 11.

13. Dispositif de nettoyage buccal selon la revendication 12, qui comprend en outre une section de poignée (20) sur laquelle la section de nettoyage buccal (10) est connectée de manière amovible.

14. Dispositif de nettoyage buccal selon la revendication 12 ou la revendication 13, qui est réalisé sous la forme d'une brosse à dents, en particulier d'une brosse à dents électrique.
